# EUROPEAN PATENT APPLICATION

(11) **EP 3 096 266 A1**
(43) Date of publication of application: **23.11.2016**
(21) Application number: 15168521.1
(22) Date of filing: 20.05.2015
(51) Int. Cl.: G06K 9/32, G06K 9/46, G06T 7/00

(54) **METHOD FOR PRECISE LOCALIZATION OF ELEMENTS ON AN IMAGE**

(71) Applicant: Mycartis NV, 9052 Zwijnaarde / Ghent (BE)
(72) Inventor: De Gil, Jose, 1024 Ecublens (CH); Rebetez, David, 1033 Cheseaux-sur-Lausanne (CH); Gaillard, Mathieu, 1004 Lausanne (CH)
(74) Representative: Cabinet Laurent & Charras

(57) **Abstract**

An image processing method and device for determining the position of at least one element (2, 102, 202) on an image said element having a known shape, the method comprising the steps consisting of :
- building a first distribution (C1) comprising a first identifiable signature (21, 22) relative to first features (11, 12) of said known shape and a second distribution (C2) comprising a second identifiable signature (23, 24) relative to second features (13, 14) of said shape,
- identifying first signature on said first distribution and said second signature on said second distribution and detecting the respective positions of said first signature on said first distribution and of said second signature on said second distribution,
- inferring from the position of first signature on said first distribution and on the position of said second signature on said second distribution, a position of the element (2, 102, 202) on said image.

## Description

### TECHNICAL FIELD AND PRIOR ART

The present invention generally relates to the field of image processing and more particularly to that of methods adapted to localize items on an image.

In computer imaging, it is sometimes needed to detect the precise position of a specific item having a known shape.

The template matching method can for instance be used to detect shapes in a digital image. Such method is described in "Template matching Techniques in Computer Vision: Theory and Practice", by R. Brunelli, ISBN 978-0-470-51706-2, 2009 and employs a convolution mask that depends on a given known feature of an image that one intends to detect.

Another method is the Hough transform method, which is especially suited to localize shapes having elliptical or circle lines.

The computation time is a major problem of the known image processing methods adapted to localize items, especially when high resolution images are processed or when, for some applications, it is required to repeat the localization operation several times for several different images.

In the case, for instance, of template matching method, the image resolution often needs to be reduced by pre-filtering the image in the frequency space, which requires to implement at least an heavy FFT (FFT as "Fast Fourier Transform") processing.

In the case of the Hough transform method, an edge detection step is generally required. This step further increases the sensitivity to the image focus and/or noise.

The problem arises of finding a new image processing method for localizing objects with known shape on an image, and that is improved in terms of computation time and sensitivity to noise or to the image quality.

### DISCLOSURE OF THE INVENTION

The present invention provides an image processing method for determining the position of at least one element on an image, said element having a known shape.

The method comprises steps of:
a) building a first distribution comprising a first identifiable signature relative to first features of said known shape and a second distribution comprising second identifiable signature relative to second features of said shape,
   said first distribution being built by a processing comprising: constituting a first array of selected pixel lines of the image and associating to each selected pixel line of the first array, a first index value and a first distribution value, said first distribution value depending on respective values of the pixels constituting said selected line, the first distribution being formed by the first index values and the first distribution values,
   said second distribution being built by a processing comprising: constituting a second array of selected pixel lines and associating to each selected line of the second array, a second index value and a second distribution value depending on respective values of the pixels constituting said selected line, the second distribution being formed by the second index values and the first distribution values,
   the first array and the second array being selected so as to form a mesh thereby constituting a coordinate system of the image allowing to identify positions in said image and so that the sets of first distribution and second distribution allow the processing of a step consisting of:
b) identifying the first signature on said first distribution and the second signature on said second distribution so as to derive position data according to said coordinate system by identifying the pixel lines of the first array corresponding to said first signature on said first distribution and the pixel lines of the second array corresponding to said second signature on said second distribution,
c) inferring from said position data according to said coordinate system, the position of the element on said image.

This method enables faster detection as 1D arrays (the first and second distributions) are processed instead of a 2D image.

The process for building first and second distribution called collapse processing has reduced sensitivity to noise as the collapse tends to even out high frequency variations, and reduced sensitivity to image focus as edge detection is not necessary.

A signature is in the present description defined as one or plural distinctive set of values of a distribution (or function) or one or plural distinctive portion(s) of the graphical representation of a distribution (or function) that is (are) relative to, or representing, characteristic feature(s) of an element's shape.

The collapse processing at step a) can be such that said value associated to a given line of pixels is function of a sum of respective values of pixels comprised in said given line.

According to a possible embodiment, said collapse processing can be such that said value associated to a given line of pixels is function of a mean of respective values of pixels comprised in said given line.

According to a possible embodiment, said collapse processing can be such that said value associated to a given line of pixels is function of a maximum of respective values of pixels comprised in said given line.

According to a possible embodiment said value can further be a function of a weighting factor.

According to a possible implementation, the identification of first signature on said first distribution and of said second signature on said second distribution can comprise the steps consisting of:
- calculating a convolution between said first distribution and a first predetermined template that is a first function comprising a model of said first signature,
- calculating a convolution between said second distribution and a second predetermined template that is a second function comprising a model of said second signature.

According to a possible embodiment, the lines of said first array and of said second array can correspond respectively to horizontal lines and vertical lines of the image.

Advantageously, when the orientation of the element on the image is known or that at least an estimation of its orientation is known before step a), the respective orientation of the lines of said first array of lines and of said second array are selected during step a) depending on said known orientation.

According to a possible embodiment, before step a), said element further has a known orientation relative to horizontal direction and vertical direction of the image, and wherein the respective orientation of the lines of said first array of lines and of said second array selected during step a) depend on said known orientation.

According to a possible implementation the lines of said first array and/or said second array can be non rectilinear lines.

The present invention further provides a computer program product comprising program code instructions stored in a computer usable medium by computer processing means comprising readable programming means for implementing an image processing method according to the present invention.

A Digital data storage device readable by computer processing means, comprising code instructions of a computer program as previously defined is further provided.

An imaging system comprising an image acquisition device and an image processing device for performing an image processing method according to the present invention.is further provided.

In another aspect, the present invention further provides an image processing device for determining the position of at least one element on an image said element having a known shape, the device comprising processing means, said processing means comprising:
- means for building a first distribution comprising a first identifiable signature relative to first features of said known shape and a second distribution comprising a second identifiable signature relative to second features of said shape,
   said first distribution being built by a processing comprising: constituting a first array of selected pixel lines of the image and associating to each selected pixel line of the first array, a first index value and a first distribution value, said first distribution value depending on respective values of the pixels constituting said selected line, the first distribution being formed by the first index values and the first distribution values,
   said second distribution being built by a processing comprising: constituting a second array of selected pixel lines and associating to each selected line of the second array, a second index value and a second distribution value depending on respective values of the pixels constituting said selected line, the second distribution being formed by the second index values and the first distribution values,
   the first array and the second array being selected so as to form a mesh thereby constituting a coordinate system of the image allowing to identify positions in said image,
- means for identifying the first signature on said first distribution and the second signature on said second distribution so as to derive position data according to said coordinate system by identifying the pixel lines of the first array corresponding to said first signature on said first distribution and the pixel lines of the second array corresponding to said second signature on said second distribution,
- means for inferring from said position data according to said coordinate system, the position of the element on said image.

The present invention further provides a molecular diagnostic platform designed to accommodate a support comprising a fiducial mark, said platform being equipped with detection means for detecting the position of said support by using an image of said support, wherein the detection means :
- are adapted to implement an image processing method as previously defined and/or,
- comprise an image processing device according to the present invention.

### BRIEF DESCRIPTION OF THE DRAWINGS

The present invention can be better understood on reading the following description of example embodiments provided purely for indicative and non-limiting purposes, in reference to the appended drawings, in which:
- Figure 1 represents a cartridge which can be imaged via a camera and containing a fiducial marker used as a positioning element which exact position on the image can be detected using an image processing method according to the invention;
- Figure 2 represents a 2D acquired image of the cartridge of figure 1A, comprising a fiducial marker which position can be detected using an image processing method according to the invention;
- Figure 3 shows 2 graphical representations of distributions each comprising recognizable signatures that are representative of features of a fiducial marker, such distributions being built according to a processing called collapse processing that is implemented during the image processing method according to the present invention;
- Figure 4 shows an example of a flowchart illustrating steps of an image processing method according to the invention;
- Figures 5A, 5B represent a first line of image pixels selected along a first collapse direction and a second line of image pixels selected along a second collapse direction during a collapse processing;
- Figure 6 shows a template for comparison with an identifiable signature of a distribution obtained during an image processing method according to the invention;
- Figure 7 represents the collapse processing step of an image processing method according to the invention and illustrates the building of two 1D distributions from a 2D image by summing up the grayscale value of pixels, such distributions comprising a signature section representative of the shape of an item, this signature being used to detect the exact position of this item on the 2D image;
- Figure 8 represents a discontinuous line of image pixel to illustrate a collapse processing method wherein some pixels of a selected line are not being processed;
- Figure 9 represents different regions of pixels processed according to a collapse processing method with different densities of processed pixels;
- Figure 10 represents non-rectilinear line of image pixels taken along a non-rectilinear collapse direction and processed according to a collapse processing method;
- Figure 11 represents a variant of the processing of figure 2, wherein collapse processing is conducted according to collapse direction that are different from horizontal and vertical directions of the image;
- Figure 12 represents a system for image acquisition and image processing configured to implement an image processing method according to the invention.

Identical, similar or equivalent parts of the various figures have the same numeric references for the sake of consistency between figures.

The various parts shown in the figures are not necessarily shown according to a uniform scale, so as to make the figures easier to read.

Furthermore, in the following description, terms which depend on the orientation of the image such as "vertical", "horizontal" apply to an image oriented in the manner illustrated in the figures.

### DETAILED DESCRIPTION OF SPECIFIC EMBODIMENTS

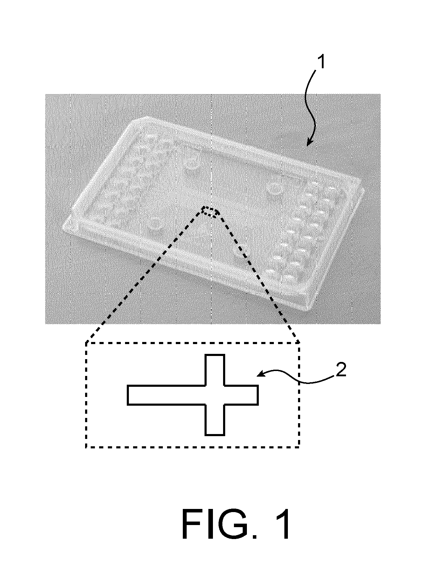

Figure 1 illustrates a cartridge that is equipped with a micro-fluidic system intended to be filled with a clinical sample and that can be used in a molecular diagnostics platform (not illustrated), for example such as those designed by the Applicant.

The molecular diagnostics platform comprises a set of instruments (not illustrated), each of which can be designed to receive such kind of cartridge. The cartridge 1 comprises at least one fiducial marker 2 with a known shape and geometry, that can be, for instance, in the form of a cross, and that is used for alignment. The cartridge is thus inserted in an instrument and positioned via mechanical means with the help of the fiducial marker 2. The positioning accuracy of the cartridge is improved by an image processing method and image processing device implemented according to the invention.

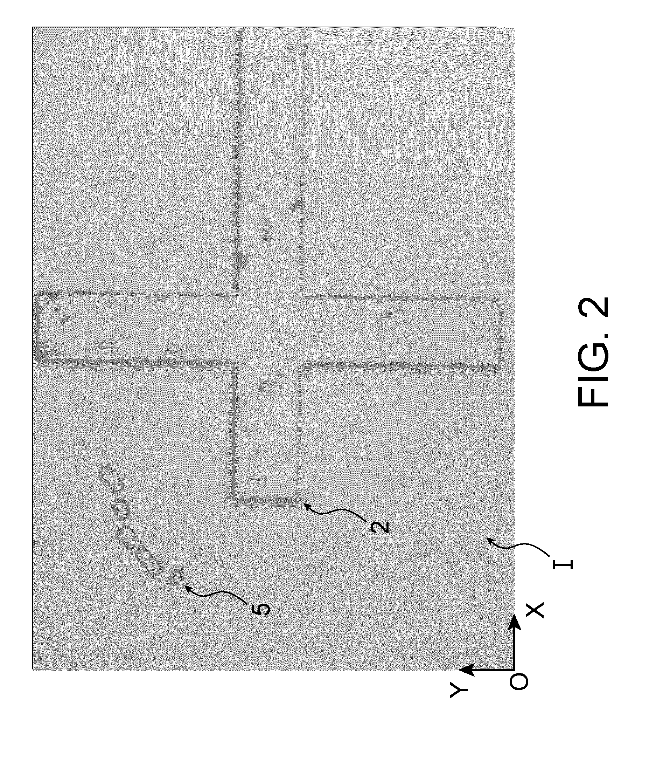

Figure 2 shows an example of a 2D acquired image with defects 5 such as dust and/or optical artifacts that can render the detection of the fiducial marker 2 more difficult. The image processing method and device implemented according to the invention enables determining, on the image I, the precise position of the fiducial marker 2 which shape is known in advance (i.e. before implementing the image processing method) but which precise position has to be determined. In the case, for instance, the acquired image I is a grayscale digital image, the value of each pixel carries an intensity information, varying from black (e.g. with value of 0) at the weakest intensity to white at the strongest intensity (e.g. with value of 255).

To determine the accurate position of the fiducial marker 2, a two dimensions (2D) image I of an area that is known to contain this fiducial marker 2 is first acquired.

Then, an image processing method is conducted so as to determine accurately the position of the fiducial marker 2 on the image I.

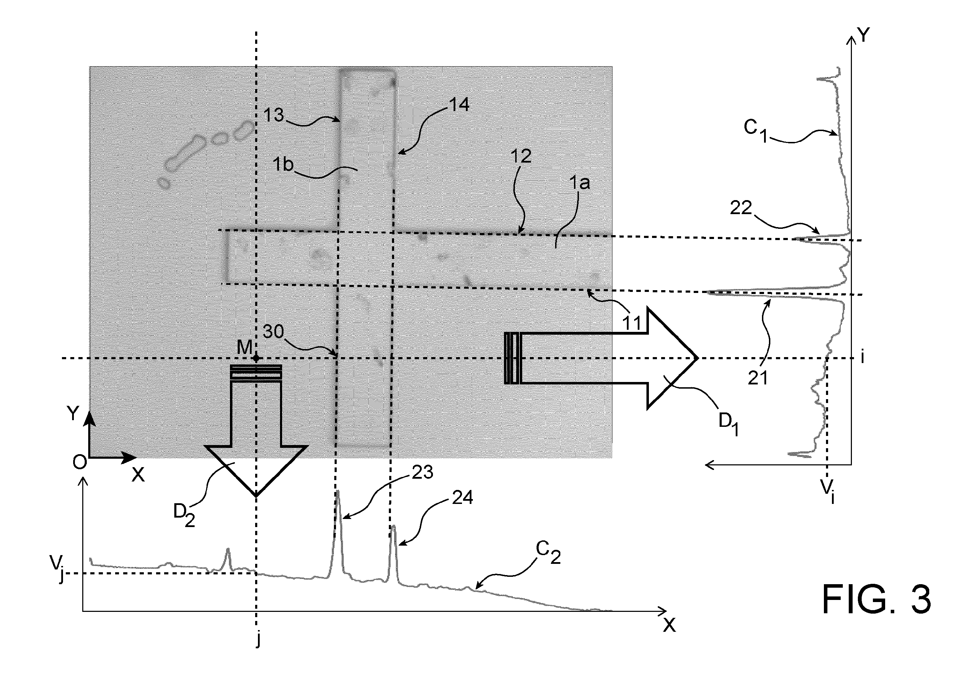

Herein below, an example of such image processing method will be explained with reference to figures 3, 4 and 5.

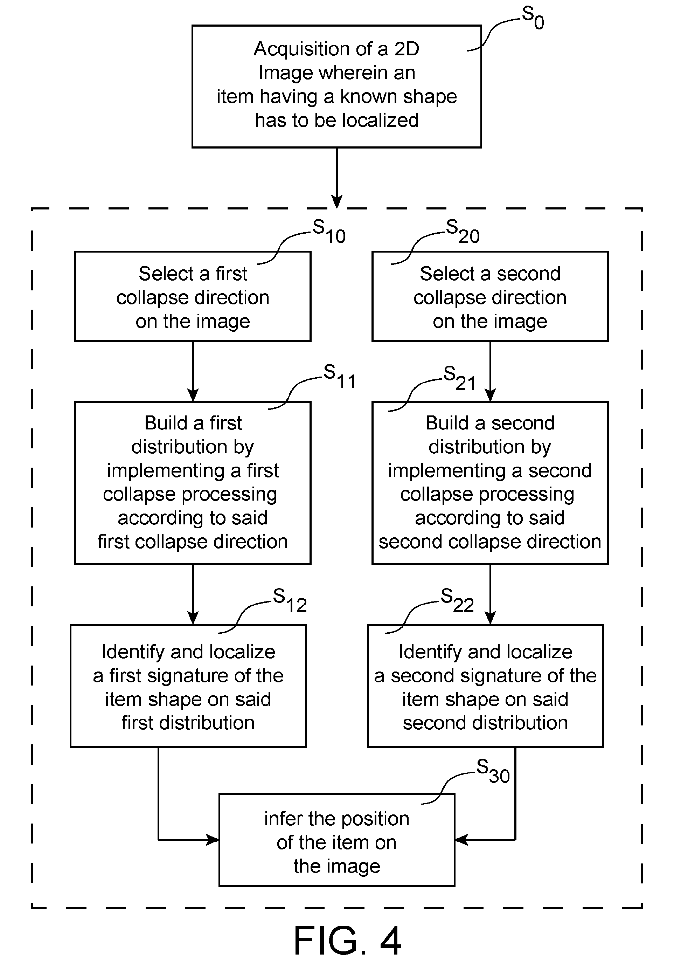

After the image I acquisition (Step S₀ on figure 4), a processing designated as "projection" or "collapse" is then conducted on the image I in order to create a first distribution and a second distribution.

The first and second distributions are associated to a first and second direction called "collapse direction" of the distribution and are built based on the pixel values of an area of the image I containing the fiducial marker shape.

Each distribution is a function that associates to a series of indexes also called "bins", a series of values also called "bin values".

Each index identifies a given line in the image I taken along the collapse direction of the distribution.

Each bin value associated to an index depends on pixel values of said given line.

The two collapse directions can be parallel respectively to the vertical direction Y and the horizontal direction X of the image I.

According to a possible implementation, the series of lines taken along the collapse directions can be vertical lines, respectively horizontal lines of the image I, in which case, each index in the distribution can be an X-coordinate of a corresponding vertical line, respectively a Y-coordinate of a corresponding horizontal line.

The first distribution and second distribution are 1D arrays that contain information regarding the marker 2 shape and that allow detecting its position on the image.

The first distribution is built by choosing a first collapse direction D1 (step S₁₀ on figure 4).

This first collapse direction can be chosen in function of a known estimation of the orientation of the fiducial marker 2 or by previously knowing the orientation of the fiducial marker 2.

This first collapse direction can further be chosen depending on the arrangement of discernible features or patterns of the fiducial marker 2 shape so that when a first array of pixel lines oriented according this collapse direction, this first array contains a recognizable feature of the shape of the fiducial marker. By "recognizable" it is meant here a feature of a shape that is distinguishable from the background of the image and/or surrounding shapes by image processing.

In the case, for instance, the marker 2 has a cross shape, the first collapse direction D1 can be a direction parallel to a strip 1a among the intersecting strips 1a, 1b forming the cross shape. On the example shown on figure 3, the first collapse direction D1 is further parallel to the horizontal direction (X direction on figure 3) of the image I.

The collapse processing (step S₁₁ on figure 4) is conducted on a first array A₁ of pixel lines Ri oriented according to said first collapse direction D1.

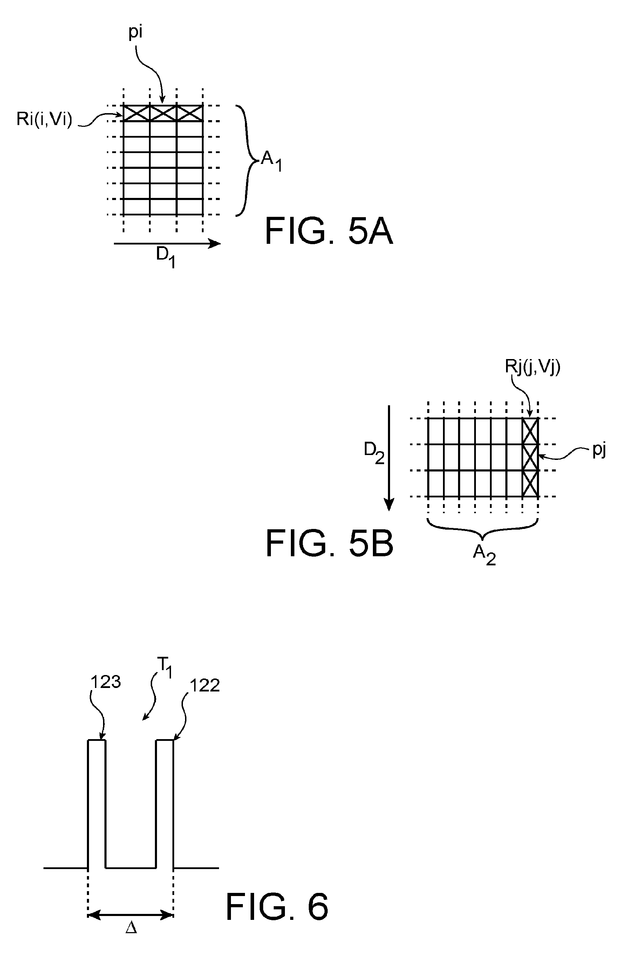

In the example illustrated on figures 3 and 5A, an horizontal pixel line Ri (the first collapse direction being, in this example, parallel to horizontal direction) is associated to a value Vi that is calculated by summing the respective values of the pixels pi constituting said horizontal line Ri. The result of this calculation is stored in association with the index value i of the line Ri. In order to build the first distribution each line of the first array or at least several lines of the first array are processed.

The first distribution thus associate to an index i (also called "bin") for each processed line Ri, a value Vi (also called "bin value") that is a function of the sum of pixel values taken along said first collapse direction D1.

In a case where the collapse direction D1 is parallel to the X direction of the image, the indexes i can conveniently correspond to Y coordinate of each line of pixels Ri that is considered.

As indicated previously, the first distribution comprises identifying section or distinctive identifiers representative of distinguishable features of the fiducial marker's shape. On the graphic representation C1 of the first distribution shown on figure 3, these identifiers are depicted as peaks 21, 22.

The peaks 21, 22 are representative of edge lines 11, 12 of the first strip 1a of the cross shape and thus constitute a first identifiable signature of the cross shape. By identifying this first signature and localizing this first signature on the first distribution, i.e. determining the indexes i of the peaks, it is possible to know which line Ri is the closest support for first strip 1a and thus, in this case where the index i is conveniently chosen to correspond to the Y coordinate of each line Ri, infer a position of the Y coordinate of the first strip 1a.

Before, or simultaneously with, or after forming the first distribution, a second distribution is built by choosing a second collapse direction D2 (step S₂₀ on figure 6).

The first collapse direction D1 and the second collapse direction D2 are such that the pixel lines selected according to these directions D1, D2 form a mesh 30 thereby constituting a coordinate system. Thus, the pixel lines Ri taken along the collapse direction D1 and the pixel lines Rj taken along the collapse direction D2 cross each other at a single point such that each given pair of indexes i and j identifies a unique point M of the image.

The second collapse direction can be a direction parallel to the second strip 1b forming the cross of the fiducial marker and parallel to the vertical direction (indicated as Y direction on figure 3) of the image I.

Before, or simultaneously with, or after the collapse processing on said first array A₁, a collapse processing in order to build the second distribution is conducted on a second array A₂ of pixel lines oriented according to said second collapse direction D2 (step S₂₁).

In the example of collapse processing illustrated on figure 3 and 5B, each vertical pixel line Rj is associated to a value Vj that is calculated by summing the respective values of the pixels constituting said vertical line Rj.

The result of this calculation is stored in association with the index value j of the line Rj. In order to build the second distribution, each line of the second array A₂ or at least several lines of the second array are processed.

The second distribution associate to a coordinate taken along X direction a bin value that is the aggregate of pixel values taken along said second collapse direction.

On the graphic representation C₂ of the second distribution shown on figure 3, peaks 23, 24 are representative of a second identifiable signature of the second strip's 1b edge lines 13, 14.

After step S₁₁ and before, or simultaneously with, or after Step S₂₁, an identification step (Step S₁₂ on figure 4) of the first signature on said first distribution can be conducted.

The first signature is one or plural distinctive set of values of the first distribution or one or plural distinctive portion(s) of the graphical representation of the first distribution that is (are) relative to, or representing, characteristic feature(s) of the element's shape when collapsed according to said first direction.

Searching for and localizing the first signature in the first distribution can be done via a signal processing method comprising: calculating a convolution with a first mask representing a template of the first signature and finding the maximum of this calculation. This can be completed with pre-processing of the distribution to correct known effects on the image, such as normalizing the value level of the pixels or suppressing skews in the distribution to compensate for lighting effects.

Figure 6 shows an example of a template T₁ used to identify the first signature. In this particular example of template, the distance Δ between two peaks 123, 124 is a key feature, whereas the peak amplitude does not need to be very precise.

Before, or simultaneously with, or after localization of first signature, the second signature of the shape is identified and localized on said second distribution (Step S₂₂ on figure 4).

Searching for the second signature can also be conducted via calculating the convolution with a second mask representing a template of the second signature and finding the maximum of this calculation. This can also be completed with pre-processing of the distribution to correct for known effects in the image, such as normalizing the value level of the pixels or suppressing skews in the distribution to compensate for lighting effects.

Thus, in the example of figure 3, the position of said first signature on said first distribution and the position of said second signature on said second distribution are detected by determining indexes i,j of the distinguishable features 11, 12, 13, 14 of the marker 2 so as to give coordinates to these features.

These indexes enable to infer the precise position of the fiducial marker 2 on the image I (step S₃₀).

The above given embodiment has been described in the context of a particular application consisting of detecting the accurate position of a marker on a specific kind of support.

However, an image processing method according to the invention can be applied to detections on other kind of supports of other kind of elements having different geometries or different shapes.

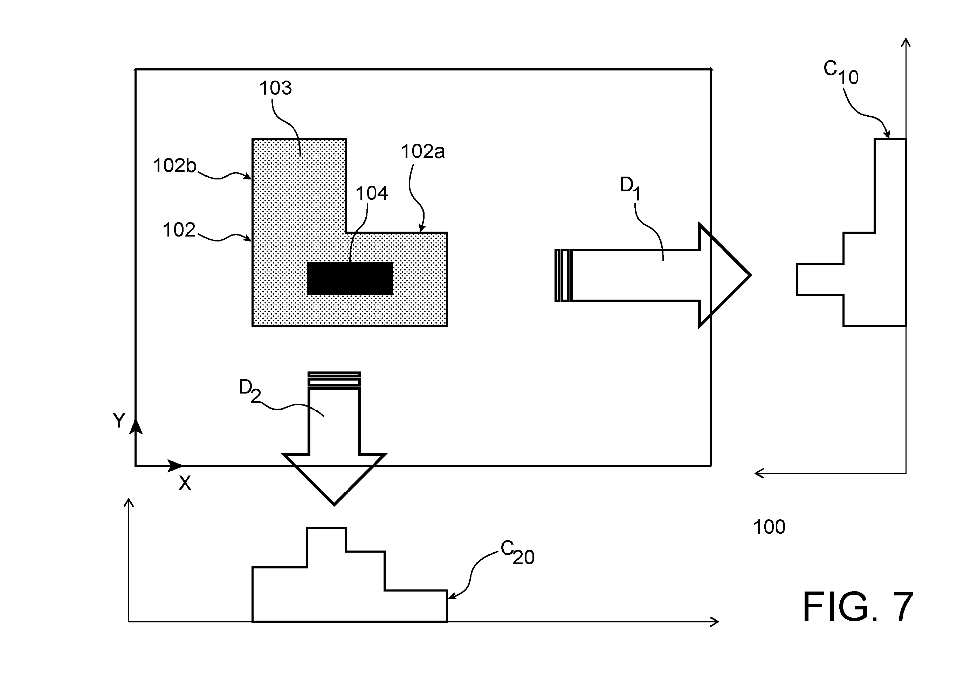

Figure 7 shows another example of item 102 which position on an image can be detected by conducting an image processing method according to the invention.

The item 102 here comprises an L-shape zone 103 having a given gray level and a black zone 104 inside the L-shape zone 103. The shape of the item 102 and its orientation are known in advance, i.e. before image processing.

Two collapse directions D1 and D2 are chosen so that a first signature and a second signature of the shape to be detected are recognizable when the L-shape is processed by collapse processing, respectively according to said first collapse direction and to said second collapse direction.

In this example, the first collapse direction and the second collapse direction correspond respectively to the direction of a strip 102a and to the direction of a strip 102b constituting the L shape. The first collapse direction D1 and the second collapse direction D2 are further respectively parallel to the horizontal direction X and parallel to the vertical direction Y of the image.

Then, a first array of N lines (with N an integer) oriented according to the first collapse direction are processed in order to build a first distribution which graphical representation C₁₀ is given on figure 7. The first distribution includes the pixels of the L-shape to be detected or at least a recognizable feature of said shape.

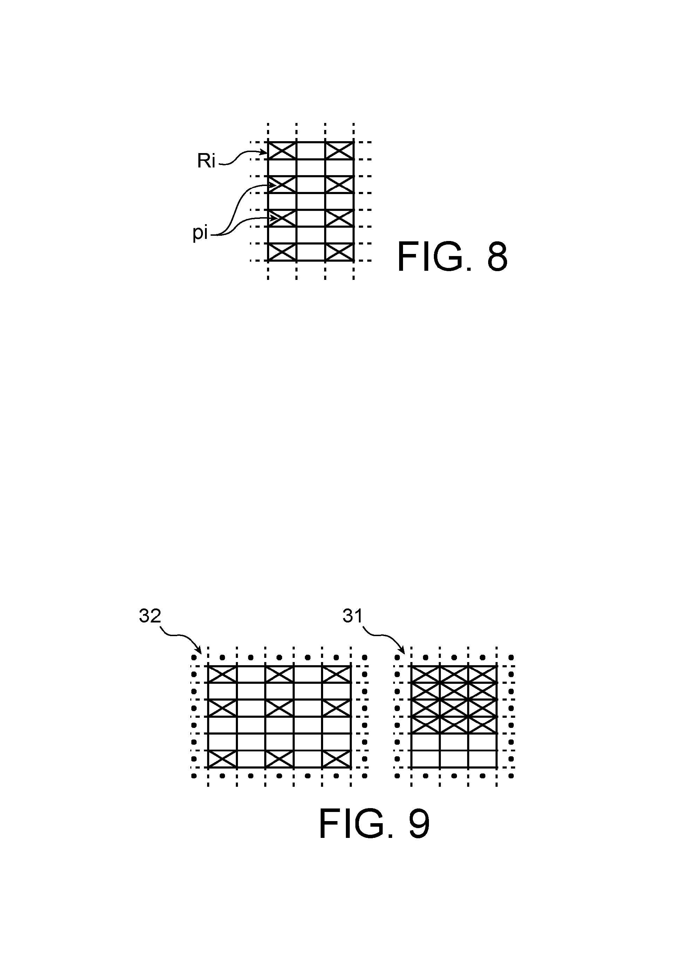

In a particular embodiment of this collapse method, only certain pixels pi of a selected pixel lines Ri are processed (processed pixels being indicated with a cross on figure 8) in order to save computation time.

For saving computation time, the collapse process can also consider only certain lines of an array of pixel lines. Indeed, a lower resolution process can in some cases be sufficient to implement a distribution with an identifiable signature.

One can even consider an uneven density of lines where more lines are processed by collapse processing in certain zones 31 of an image, for example in the center of the image, than other zones 32 of the image (figure 9).

This density can be tuned depending on the prior knowledge that one has of the features of the shape to detect.

In order to build a second distribution which graphical representation C₂₀ is further given, a second array of M lines (with M an integer that can be equal to N) is also processed. The M lines are oriented according to a second collapse direction D₂.

In the particular example of figure 7, the collapse processing is done by summing the value of the pixels of a line of pixels.

Alternately, the collapse processing can be done by associating a value to each processed row of pixels in function of: a weighted sum of the pixel values of the processed row, or in function of a maximum pixel value in this processed row, or a mean pixel value in this processed row.

Then, a first signature of the L-shape and the position of this first signature in the distribution are detected, whereas on the second distribution, a second signature of the L-shape and its position are detected.

Such detection is done for instance by calculating a convolution of the first distribution with a first predetermined template and a convolution of the second distribution with a second predetermined template.

From the detected position of the first signature in the first distribution and of the second signature in the second distribution, the position of the L-shape on the 2D image is then detected.

According to a variant of the previously described embodiment of the image processing method, collapse directions different from horizontal direction X and vertical direction Y of the image can be selected, in particular when the shape to localize has identifiable features that are not oriented according to X and Y directions.

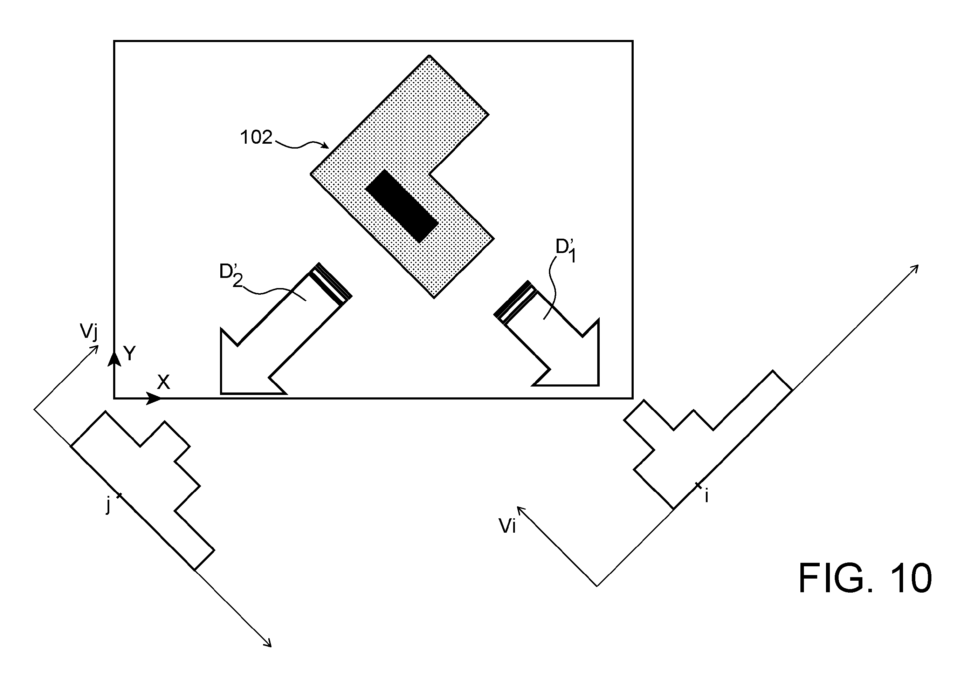

An example of such variant is shown on figure 10, wherein the item 102 with L-shape, has an orientation such that the respective directions of the 2 strips 102a, 102b constituting the L shape make a 45° angle with the horizontal X direction and the vertical direction Y of the image. In this variant, collapse directions D'1, and D'2 are chosen in function of the 2 lines constituting the L shape and therefore make a 45° angle with horizontal direction X and vertical direction Y of the image.

In this case, the collapse process to build the first and second distribution may use algorithm such as Bresenham in order to select pixels along a line for oblique collapse directions.

The image processing method is not limited to 2 collapse directions in order to localize an item on an image, and can be implemented with more a number of collapse directions depending on the number of features that need to be identified in order to infer the precise position of this item.

In some cases, especially when the item shape to detect is more complicated and that the signature of the shape is more difficult to discriminate from the background, k collapse directions (with k > 2) can be used so as to build k distributions.

The image processing method is not limited either to rectilinear collapse directions. Indeed, as long as a first and second array pixel lines, forming a coordinate system of the image as defined above, are used to perform a first and second collapse, one can infer a position in the image I from the knowledge of signatures in the first and second distributions resulting from the collapse processes.

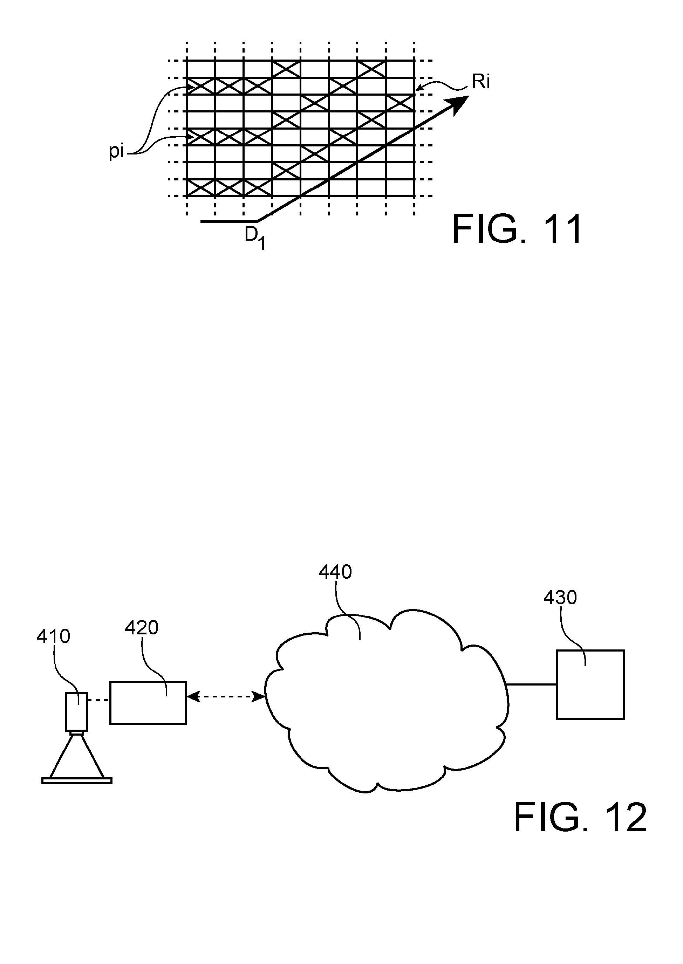

Figure 11 shows a processed line Ri of pixels taken along a non rectilinear collapse "direction" D1. For example, radial collapses can be implemented for certain images with specific circular characteristics.

The above described method is not limited to the processing of grayscale image and can further be applied to a color image. In this case, the pixel "values" and the bin "values" as explained above can be a vector of values for the Red, Green and Blue components (or any other coloring scheme such as YUV). The collapse operation, such as the sum of pixel values, can therefore be made on vectors such that the processing of the vector-values of one line of pixels Ri results in a vector-value Vi for the bin i in the distribution.

Alternatively, the above mentioned distributions can be built for each color, the values of Red, Green, Blue components (or other coloring schemes such as YUV) being processed independently from each other, in order to produce a first and a second distribution for the red component, a first and a second distribution for the green component, and a first and a second distribution for the blue component.

Alternately, only some of the color components can be processed so as to build first and second distributions only for these selected colors.

In another embodiment, first and second distributions are implemented by combining all the color components of the pixels. In this case, a different weighting can be applied between color components. For example, blue color component of pixels can be associated with a higher weight when the item to localize is known to be blue.

A filtering of the colored image can be conducted prior to the collapse processing and the building of the first and second distribution.

Figure 12 represents an example of imaging system according to the invention, comprising an image acquisition device 410 that is connected to a processing device 420. The acquisition device 410 can be, for instance, an optical system configured to acquire transmission as well as fluorescence images.

The processing device 420 is suitably configured to process images from the acquisition device 410, and for implementing an image processing method according to the invention and for example as above-described.

The processing device 420 includes a computing section with all the electronic components, software or other necessary image processing means.

For example, the processing device 420 includes a programmable processor, a memory module and at least an input, that is coupled to a bus system.

The processor can comprise, e.g., a field-programmable gate array circuit (FPGA) or a microprocessor, or a CPU processor, or a workstation station processor. The processing device 420 can be or comprise a touch screen operated computer.

The memory module can comprise, e.g., a hard disk, and/or a ROM, and/or a RAM, and/or a magnetic or optical storage system.

Algorithms for image processing such as described above can be stored in the memory module in order to perform image processing in accordance with any of the embodiments of the present invention.

A program to implement the method according to the invention can further be recorded on a medium (e.g. CD-ROM, or DVD ROM, or removable USB media, or magnetic media or hard drive, or memory card such as SDRAM) that can be read by the processing device 420.

This program can alternatively be stored in a server 430 on a remote location that can communicate with the processing device 420. Thus the processing device 420 can further be connected to a network 440 via which data regarding the image processing method are emitted or received.

The image processing method according to the invention can find applications in different fields such as microscopy, automation, artificial vision.

Another example of application is the precise detection of items that are placed approximately in a location such as an object dropped in a conveying belt or positioned in a receiving place with relative imprecision.

The image processing method can further be used for instance to align a device, or to pick, observe or manipulate an item.

## Claims

1. An image processing method for determining the position of at least one element (2,102) on an image said element having a known shape, the method comprising steps conducted by at least a processor, said steps consisting of:
a) building a first distribution (C1) comprising a first identifiable signature (21, 22) relative to first features (11, 12) of said known shape and a second distribution (C2) comprising a second identifiable signature (23, 24) relative to second features (13, 14) of said known shape,
said first distribution being built by a first processing comprising: constituting a first array (A1) of selected pixel lines (Ri) of the image and associating to each selected pixel line (Ri) of the first array, a first index value (i) and a first distribution value (Vi), said first distribution value depending on respective values of the pixels constituting said selected line (Ri), the first distribution (C1) being formed by the first index values (i) and the first distribution values (Vi),
said second distribution being built by a second processing comprising: constituting a second array (A2) of selected pixel lines (Rj) of the image and associating to each selected line (Rj) of the second array, a second index value (j) and a second distribution value (Vj) depending on respective values of the pixels constituting said selected line (Rj), the second distribution (C2) being formed by the second index values (j) and the second distribution values (Vj),
the first array (A1) and the second array (A2) being selected so as to form a mesh of selected pixel lines (Ri,Rj) thereby constituting a coordinate system,
b) identifying the first signature on said first distribution and the second signature on said second distribution so as to derive position data according to said coordinate system by identifying the pixel lines of the first array corresponding to said first signature on said first distribution and the pixel lines of the second array corresponding to said second signature on said second distribution,
c) inferring from said position data according to said coordinate system, the position of the element (2, 102,202) on said image.

2. The method according to claim 1, wherein said processing is such that said value associated to a given line of pixels is function of a sum of respective values of pixels comprised in said given line.

3. The method according to claim 1 or 2, wherein said processing is such that said value associated to a given line of pixels is function of a mean of respective values of pixels comprised in said given line.

4. The method according to any of the claims 1 to 3, wherein said processing is such that said value associated to a given line of pixels is function of a maximum of respective values of pixels comprised in said given line.

5. The method according to any of the claims 2 to 4, wherein said value is further function of a weighting factor.

6. The method according to any of the claims 1 to 5, wherein identifying first signature on said first distribution and said second signature on said second distribution comprises the steps consisting of:
- calculating a convolution between said first distribution and a first predetermined template that is a first function comprising a model of said first signature,
- calculating a convolution between said second distribution and a second predetermined template of a second function comprising a model of said second signature.

7. The method according to any of the claims 2 to 6, wherein the lines of said first array and the lines of said second array correspond respectively to horizontal rows and vertical rows of the image.

8. The method according to any of the claims 2 to 6, wherein before step a), said element further has a known orientation relative to horizontal direction and vertical direction of the image, and wherein the respective orientation of the lines of said first array of lines and of said second array selected during step a) depend on said known orientation.

9. The method according to any of the claims 2 to 6, wherein the lines of said first array and/or said second array are non rectilinear lines.

10. A computer program comprising program code instructions for enabling computer processing means to perform an image processing method according to any one of claims 1 to 9.

11. A Computer program product comprising program code instructions stored in a computer usable medium by computer processing means, comprising readable programming means for implementing an image processing method according to any one of claims 1 to 9.

12. A Digital data storage device readable by computer processing means, comprising code instructions of a computer program according to claim 11.

13. An image processing device for determining the position of at least one element (2, 102) on an image said element having a known shape, the method comprising processing means, said processing means comprising
- means for building a first distribution (C1) comprising a first identifiable signature (21, 22) relative to first features (11, 12) of said known shape and a second distribution (C2) comprising a second identifiable signature (23, 24) relative to second features (13, 14) of said shape,
said first distribution being built by a processing comprising: constituting a first array (A1) of selected pixel lines (Ri) of the image and associating to each selected pixel line (Ri) of the first array, a first index value (i) and a first distribution value (Vi), said first distribution value depending on respective values of the pixels constituting said selected line (Ri), the first distribution (C1) being formed by the first index values (i) and the first distribution values (Vi),
said second distribution being built by a processing comprising: constituting a second array (A2) of selected pixel lines (Rj) and associating to each selected line (Rj) of the second array, a second index value (j) and a second distribution value (Vj) depending on respective values of the pixels constituting said selected line (Rj), the second distribution (C2) being formed by the second index values (j) and the first distribution values (Vj),
the first array (A1) and the second array (A2) being selected so as to form a mesh of selected pixel lines (Ri,Rj) thereby constituting a coordinate system,
- means for identifying the first signature on said first distribution and the second signature on said second distribution so as to derive position data according to said coordinate system by identifying the pixel lines of the first array corresponding to said first signature on said first distribution and the pixel lines of the second array corresponding to said second signature on said second distribution,
- means for inferring from said position data according to said coordinate system, the position of the element (2, 102,202) on said image.

14. A molecular diagnostic platform designed to accommodate a support comprising a fiducial mark, said platform being equipped with detection means for detecting the position of said support by using an image of said support, wherein the detection means :
- are adapted to implement an image processing method according to any of the claims 1 to 9 and/or,
- comprise an image processing device according to claim 13.
